# EUROPEAN PATENT APPLICATION

(11) **EP 4 546 309 A1**
(43) Date of publication of application: **30.04.2025**
(21) Application number: 23859827.0
(22) Date of filing: 30.06.2023
(51) Int. Cl.: G09C 1/00, G06F 21/62

(54) **INFORMATION PROCESSING DEVICE AND PRIVACY PROTECTION DATA LINKAGE SYSTEM**

(30) Priority: 02.09.2022 JP 2022140088
(71) Applicant: NTT DOCOMO, INC., Tokyo 100-6150 (JP)
(72) Inventor: NOZAWA Kazuma, Tokyo 100-6150 (JP); HASEGAWA Keita, Tokyo 100-6150 (JP); NAKAGAWA Tomohiro, Tokyo 100-6150 (JP); SASAKI Kazuya, Tokyo 100-6150 (JP); TERADA Masayuki, Tokyo 100-6150 (JP)
(74) Representative: Viering, Jentschura & Partner mbB Patent- und Rechtsanwälte
(86) International application number: PCT/JP2023/024444
(87) International publication number: WO 2024/048057

(57) **Abstract**

An information processing device (10) holds user data including: a user ID and attribute information related to a user and includes an encryption unit (11) that encrypts the user ID in user data to be counted on the basis of an encryption key held by the information processing device itself and a keyed one-way commutative operation and encrypts the attribute information in the user data using a homomorphic encryption method, in which a counting process is executable, to generate encrypted user data for the user data; a counting processing unit (12) that counts the number of encrypted user data items having common attribute information to generate encrypted count data; and a disclosure limitation processing unit (13) that executes a disclosure limitation process on the generated encrypted count data to generate encrypted statistical information.

## Description

### Technical Field

The present disclosure relates to an information processing device and a privacy protection data linkage system.

### Background Art

In a case where information processing devices (devices broadly including computers, servers, and the like; hereinafter, referred to as "devices") of a plurality of organizations perform statistical analysis or the like on user data that is to be concealed and is managed on a database, some measures need to be taken from the viewpoint of privacy protection. As one example of the measures, a technique is known in which a system configuration having an interface that can simultaneously handle both data to be concealed and data that may be disclosed integrates the both data while concealing the data to be concealed (the following Patent Literature 1).

### Citation List

### Patent Literature

Patent Literature 1: Japanese Unexamined Patent Publication No. 2011 - 081301

### Summary of Invention

### Technical Problem

However, in the technique disclosed in Patent Literature 1, it is essential to select the data to be concealed from the input user data, and a case where the user data does not include the data that may be disclosed, that is, a case where the entire input user data is to be concealed has not been taken into consideration. Therefore, there is room for improvement in this regard.

In addition, there is a strong demand for a technique in which, even in a case where an information processing device of a single organization performs statistical analysis and the like on, for example, user data including user information to be concealed (hereinafter, referred to as "attribute information"), statistical information, from which a correspondence relationship with individuals has been excluded, is generated, which makes it possible to prevent the leakage of information to be concealed and to eliminate the risk of privacy violations.

An object of the present disclosure is to prevent the leakage of information to be concealed and to eliminate the risk of privacy violations by generating statistical information, from which a correspondence relationship with individuals has been excluded.

### Solution to Problem

According to the present disclosure, there is provided an information processing device that holds user data including a user ID and attribute information related to a user and generates statistical information related to a target user. The information processing device includes: an encryption unit that encrypts the user ID in user data to be counted on the basis of an encryption key held by the information processing device itself and a keyed one-way commutative operation and encrypts the attribute information in the user data to be counted using a homomorphic encryption method, in which a counting process is executable, to generate encrypted user data for the user data to be counted; a counting processing unit that counts the number of encrypted user data items having common attribute information among the encrypted user data items generated by the encryption unit to generate encrypted count data; and a disclosure limitation processing unit that executes a disclosure limitation process on the encrypted count data generated by the counting processing unit to generate encrypted statistical information.

In the information processing device, the encryption unit encrypts the user ID in the user data to be counted on the basis of the encryption key held by the information processing device itself and the keyed one-way commutative operation and encrypts the attribute information in the user data using the homomorphic encryption method, in which the counting process is executable, to generate the encrypted user data for the user data to be counted. In addition, the encryption of the user ID and the encryption of the attribute information are executed in any order. Then, the counting processing unit counts the number of encrypted user data items having the common attribute information among the encrypted user data items generated by the encryption unit to generate the encrypted count data. The counting is performed, for example, by categorizing a plurality of records constituting the encrypted user data represented by binary values according to a corresponding portion of the attribute information and calculating a sum for each category in a vertical direction (the sum of the same bits in a bit string). In addition, the disclosure limitation processing unit performs the disclosure limitation process on the generated encrypted count data to generate the encrypted statistical information. In this way, the statistical information, from which a correspondence relationship with individuals has been excluded, is generated, which makes it possible to prevent the leakage of information to be concealed and to eliminate the risk of privacy violations.

### Advantageous Effects of Invention

According to the present disclosure, it is possible to prevent the leakage of information to be concealed and to eliminate the risk of privacy violations by generating statistical information, from which a correspondence relationship with individuals has been excluded.

### Brief Description of Drawings

[FIG. 1] FIG. 1 is a diagram showing a configuration of an information processing device according to a first embodiment.
[FIG. 2] FIG. 2 is a flowchart showing a process executed in the information processing device according to the first embodiment.
[FIG. 3] FIG. 3(a) is a view showing input of user data, FIG. 3(b) is a view showing encryption of a user ID, and FIG. 3(c) is a view showing encryption of attribute information.
[FIG. 4] FIG. 4(a) is a view showing a counting process, FIG. 4(b) is a view showing a disclosure limitation process, and FIG. 4(c) is a view showing a decryption process.
[FIG. 5] FIG. 5 is a diagram showing a configuration of a privacy protection data linkage system according to a second embodiment.
[FIG. 6] FIG. 6 is a flowchart showing a process executed in the privacy protection data linkage system according to the second embodiment.
[FIG. 7] FIG. 7(a) is a view showing input of user data, and FIG. 7(b) is a view showing an anonymization process.
[FIG. 8] FIG. 8 is a view showing ID irreversible conversion.
[FIG. 9] FIG. 9 is a view showing encryption of an ID.
[FIG. 10] FIG. 10(a) is a view showing the encryption of the attribute information, and FIG. 10(b) is a view showing transmission and reception of an encrypted ID.
[FIG. 11] FIG. 11 is a view showing re-encryption of the ID.
[FIG. 12] FIG. 12 is a view showing data matching.
[FIG. 13] FIG. 13 is a view showing a counting process.
[FIG. 14] FIG. 14 is a view showing a disclosure limitation process.
[FIG. 15] FIG. 15 is a view showing a decryption process.
[FIG. 16] FIG. 16 is a diagram showing a modification example of the configuration of the information processing device according to the first embodiment.
[FIG. 17] FIG. 17 is a diagram showing a modification example of the configuration of the privacy protection data linkage system according to the second embodiment.
[FIG. 18] FIG. 18 is a diagram showing another modification example of the configuration of the privacy protection data linkage system according to the second embodiment.
[FIG. 19] FIG. 19 is a diagram showing a modification example of the configuration of the privacy protection data linkage system in which the attribute information is not a requirement and the user data including at least the user ID is to be counted.
[FIG. 20] FIG. 20 is a flowchart showing a process executed in the privacy protection data linkage system shown in FIG. 19.
[FIG. 21] FIG. 21 is a diagram showing an example of a hardware configuration of the information processing device.

### Description of Embodiments

Various embodiments according to the present disclosure will be described below with reference to the drawings. Hereinafter, as a first embodiment, an embodiment will be described in which an information processing device of a single organization generates statistical information, from which a correspondence relationship with individuals has been excluded, for user data including attribute information to be concealed. As a second embodiment, an embodiment will be described in which a privacy protection data linkage system including a plurality of devices that hold user data including a user ID and attribute information related to a user generates statistical information, from which a correspondence relationship with individuals has been excluded, using cooperation between one device among the plurality of devices and a counterpart device.

### (First Embodiment)

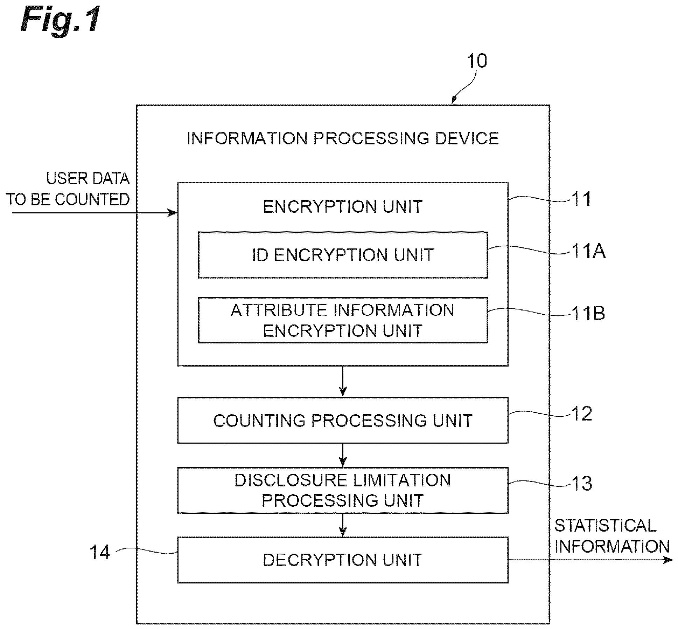

As shown in FIG. 1, an information processing device 10 according to a first embodiment includes an encryption unit 11, a counting processing unit 12, and a disclosure limitation processing unit 13 as the minimum necessary components for generating statistical information, from which a correspondence relationship with individuals has been excluded, in a single body and further includes a decryption unit 14 as a component for restoring the generated statistical information. Hereinafter, the functions of each unit will be described.

The encryption unit 11 is a functional unit that acquires user data including a user ID and attribute information related to a user from an external device, encrypts the user ID in the user data to be counted on the basis of an encryption key held by the device 10 itself and a keyed one-way commutative operation and encrypts the attribute information in the user data to be counted using a homomorphic encryption method, in which a counting process can be executed, to generate encrypted user data for the user data to be counted. The encryption unit 11 includes an ID encryption unit 11A having a function of encrypting the user ID and an attribute information encryption unit 11B having a function of encrypting the attribute information. In addition, the encryption of the user ID and the encryption of the attribute information may be executed in any order.

The counting processing unit 12 is a functional unit that counts the number of encrypted user data items having common attribute information among the encrypted user data items generated by the encryption unit 11 to generate encrypted count data. Further, a counting method will be described below.

The disclosure limitation processing unit 13 is a functional unit that executes a disclosure limitation process on the encrypted count data generated by the counting processing unit 12 to generate encrypted statistical information.

The decryption unit 14 is a functional unit that decrypts the encrypted statistical information generated by the disclosure limitation processing unit 13 on the basis of a decryption method corresponding to the encryption by the encryption unit 11 and outputs the obtained statistical information to the external device.

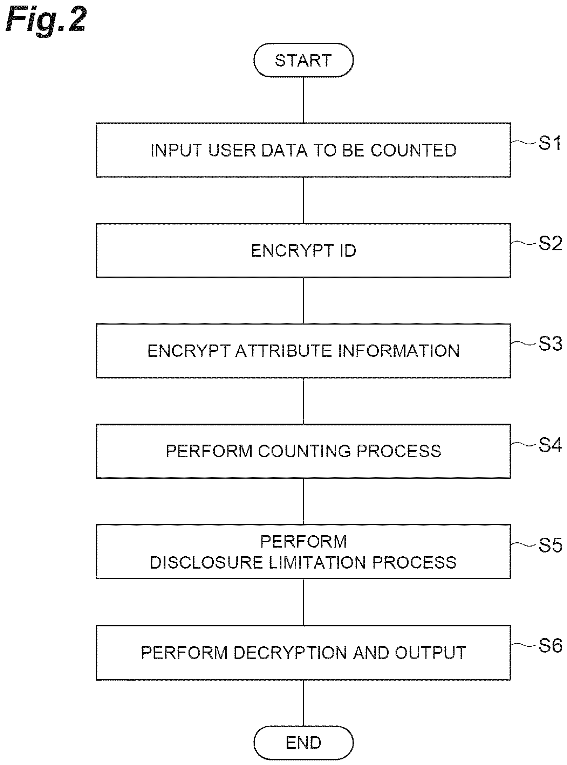

Next, a process executed in the information processing device 10 will be described with reference to FIG. 2, FIGS. 3(a) to 3(c), and FIGS. 4(a) to 4(c).

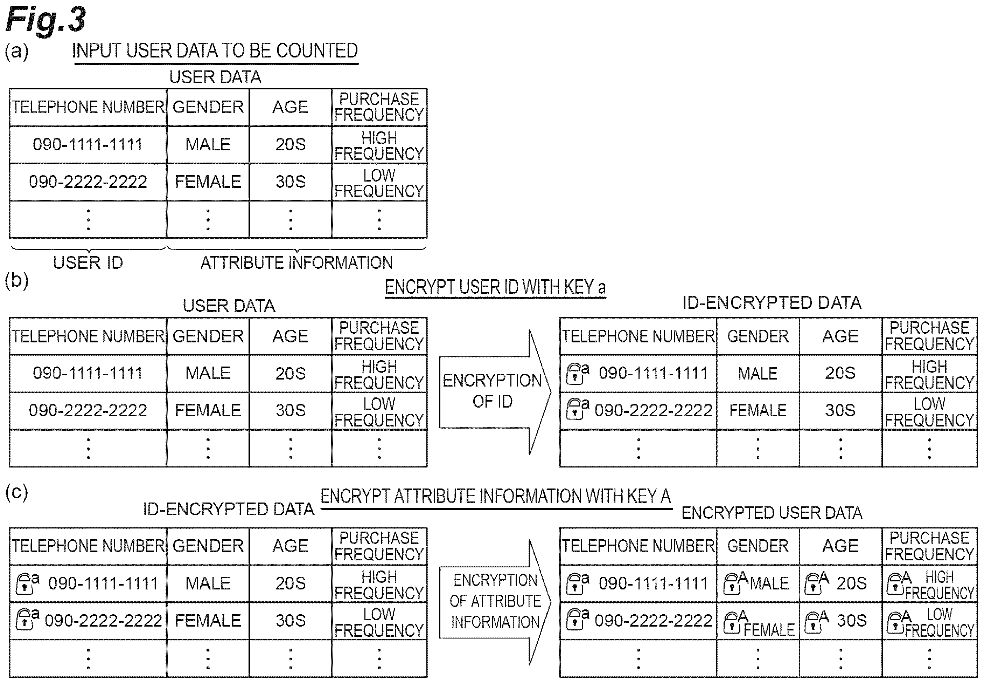

First, the user data to be counted is input to the encryption unit 11 (Step S1 in FIG. 2). Here, the input user data includes a user ID and attribute information related to the user as shown in FIG. 3(a). For example, a phone number is used as the user ID, and information, such as gender, age, and a purchase frequency, is given as an example of the attribute information.

Then, as shown in FIG. 3(b), the ID encryption unit 11A of the encryption unit 11 encrypts the user ID in the user data with a private key a, which has been prepared in advance, to obtain ID-encrypted data (Step S2).

Then, as shown in FIG. 3(c), the attribute information encryption unit 11B of the encryption unit 11 encrypts the attribute information in the ID-encrypted data with a private key A, which has been prepared in advance, to obtain encrypted user data (Step S3).

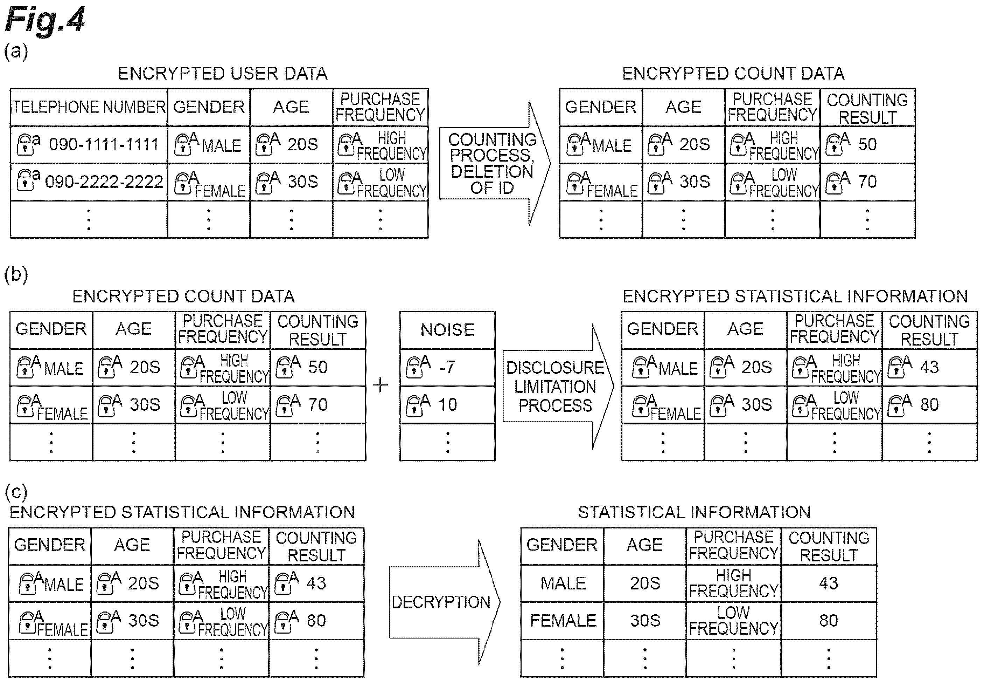

Then, as shown in FIG. 4(a), the counting processing unit 12 counts the number of encrypted user data items having common attribute information among the encrypted user data items generated by the encryption unit 11 to generate encrypted count data (Step S4). Here, the counting is executed, for example, by categorizing a plurality of records constituting the encrypted user data represented by binary values according to a corresponding portion of the attribute information and calculating a sum in a vertical direction (the sum of the same bits in a bit string) for each category. Then, after the encrypted count data is generated, the user ID is unnecessary. Therefore, the counting processing unit 12 deletes the user ID and generates encrypted count data.

Then, as shown in FIG. 4(b), the disclosure limitation processing unit 13 executes a disclosure limitation process on the encrypted count data generated by the counting processing unit 12 to generate encrypted statistical information (Step S5). For example, FIG. 4(b) shows an example in which noise is added to the counting result in the encrypted count data to generate the encrypted statistical information including the counting result to which the noise has been added. In this way, the "encrypted statistical information" is generated as the statistical information from which the correspondence relationship with individuals has been excluded.

Furthermore, as shown in FIG. 4(c), the decryption unit 14 decrypts the encrypted statistical information generated by the disclosure limitation processing unit 13 using a decryption method corresponding to the encryption by the encryption unit 11 and outputs the obtained plaintext statistical information to the external device (Step S6).

According to the first embodiment described above, the "encrypted statistical information" is generated as the statistical information from which the correspondence relationship with individuals has been excluded. Therefore, in the single information processing device 10, it is possible to prevent the leakage of the attribute information to be concealed and to eliminate the risk of privacy violations.

### (Second Embodiment)

Next, as the second embodiment, an embodiment will be described in which a privacy protection data linkage system that includes a plurality of devices holding user data including a user ID and attribute information related to a user generates statistical information, from which correspondence relationship with individuals has been excluded, using cooperation between one device among the plurality of devices and a counterpart device.

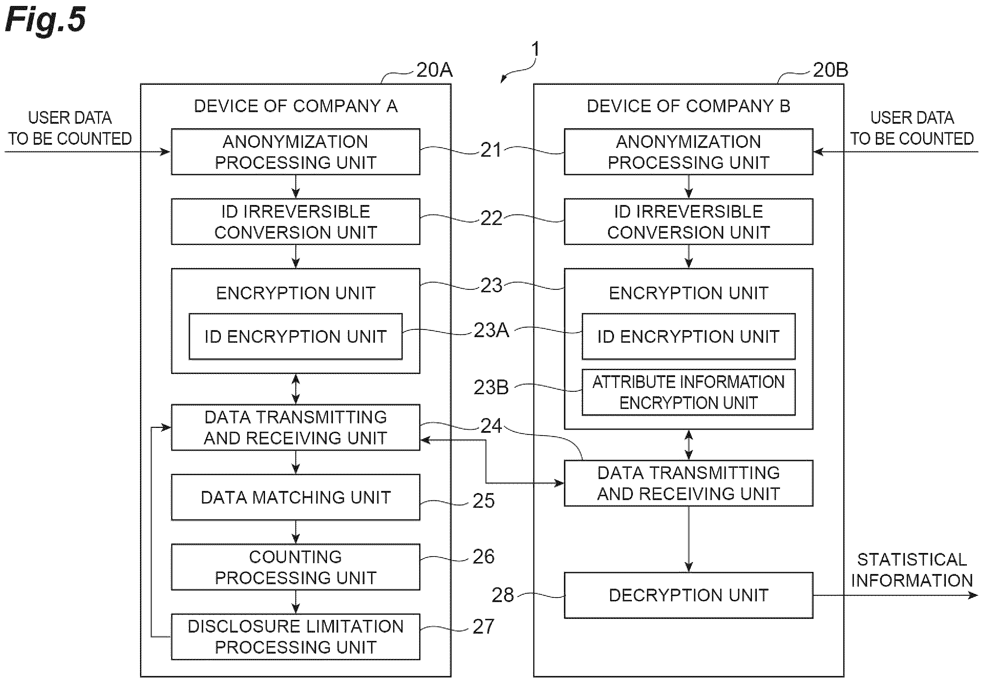

As shown in FIG. 5, a privacy protection data linkage system 1 according to the second embodiment includes a "device of a company A" (hereinafter, referred to as a "device 20A") as the one device and a "device of a company B" (hereinafter, referred to as a "device 20B") as the counterpart device.

While the device 20A includes an anonymization processing unit 21, an ID irreversible conversion unit 22, an encryption unit 23, a data transmitting and receiving unit 24, a data matching unit 25, a counting processing unit 26, and a disclosure limitation processing unit 27, the device 20B includes an anonymization processing unit 21, an ID irreversible conversion unit 22, an encryption unit 23, a data transmitting and receiving unit 24, and a decryption unit 28. Hereinafter, the functions of each unit will be described.

The anonymization processing unit 21 is a functional unit that executes a process for privacy protection of attribute information on the user data held by the device 20A itself before the encryption of the user ID and is provided in common to the devices 20A and 20B. In addition, for example, one or more of k-anonymity, l-diversity, and t-closeness are adopted as the privacy protection, and an example in which the k-anonymity among them is performed will be described below.

The ID irreversible conversion unit 22 is a functional unit that executes a process for irreversible conversion into the user ID on the user data held by the device 20A itself before the encryption of the user ID and is provided in common to the devices 20A and 20B. In addition, the irreversible conversion process includes a hashing process. After executing the hashing process on the user ID, the ID irreversible conversion unit 22 discards a salt used in the hashing process.

The encryption unit 23 provided in the device 20A is a functional unit that has a function of encrypting the user ID in the user data to be counted on the basis of an encryption key held by the device 20A itself and a keyed one-way commutative operation to generate encrypted user data for the user data to be counted, and includes an ID encryption unit 23A that performs the functional operation.

In contrast, the encryption unit 23 provided in the device 20B is a functional unit that encrypts the user ID in the user data to be counted on the basis of an encryption key held by the device 20B itself and a keyed one-way commutative operation and encrypts the attribute information in the user data to be counted, using a homomorphic encryption method in which a counting process can be executed, to generate encrypted user data for the user data to be counted, and includes an ID encryption unit 23A having a function of encrypting the user ID and an attribute information encryption unit 23B having a function of encrypting the attribute information. In addition, the encryption of the user ID and the encryption of the attribute information may be performed in any order.

The data transmitting and receiving unit 24 is a functional unit that transmits and receives the encrypted user data and is provided in common to the devices 20A and 20B.

The data matching unit 25 is a functional unit that matches the encrypted user data of the device 20A generated by the encryption unit 23 of the device 20A with the encrypted user data of the device 20B as the counterpart device on the basis of a user ID correspondence portion specified on the basis of predetermined structural information of the user data and is provided in the device 20A.

The counting processing unit 26 is a functional unit that counts the number of encrypted user data items having the user ID correspondence portions matched with each other as a result of the matching by the data matching unit 25 to generate encrypted count data related to a target user and is provided in the device 20A. In addition, a counting method will be described below.

The disclosure limitation processing unit 27 is a functional unit that executes a disclosure limitation process on the encrypted count data generated by the counting processing unit 26 to generate encrypted statistical information and is provided in the device 20A.

The decryption unit 28 is a functional unit that decrypts the encrypted statistical information transmitted from the device 20A on the basis of a decryption method corresponding to the encryption by the attribute information encryption unit 23B and outputs the obtained statistical information to the external device, and is provided in the device 20B.

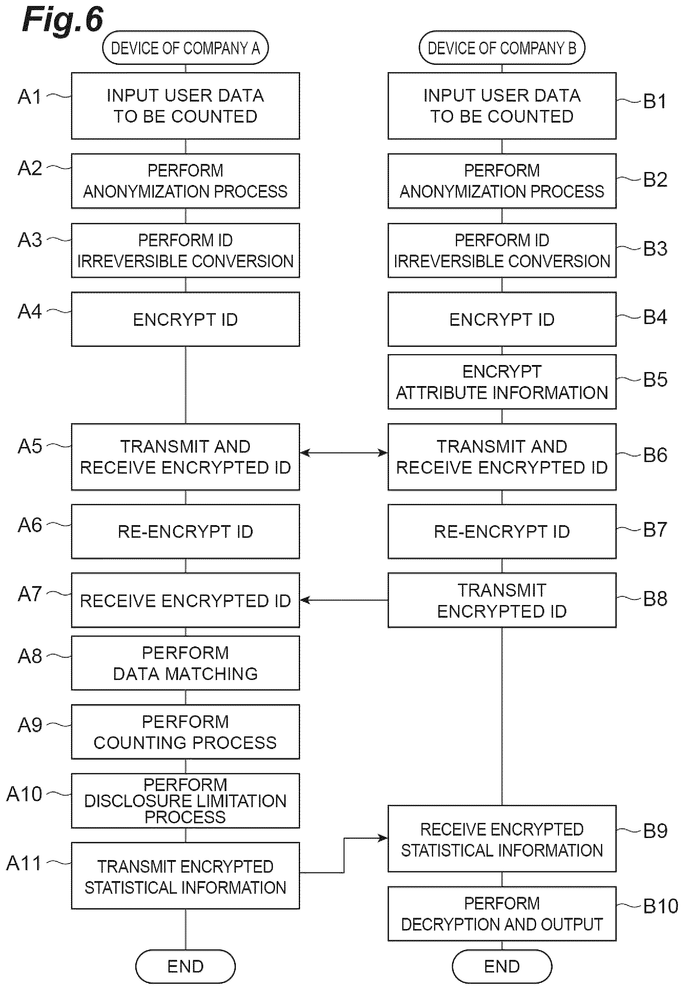

Next, the process executed in the privacy protection data linkage system 1 will be described with reference to FIGS. 6 to 15.

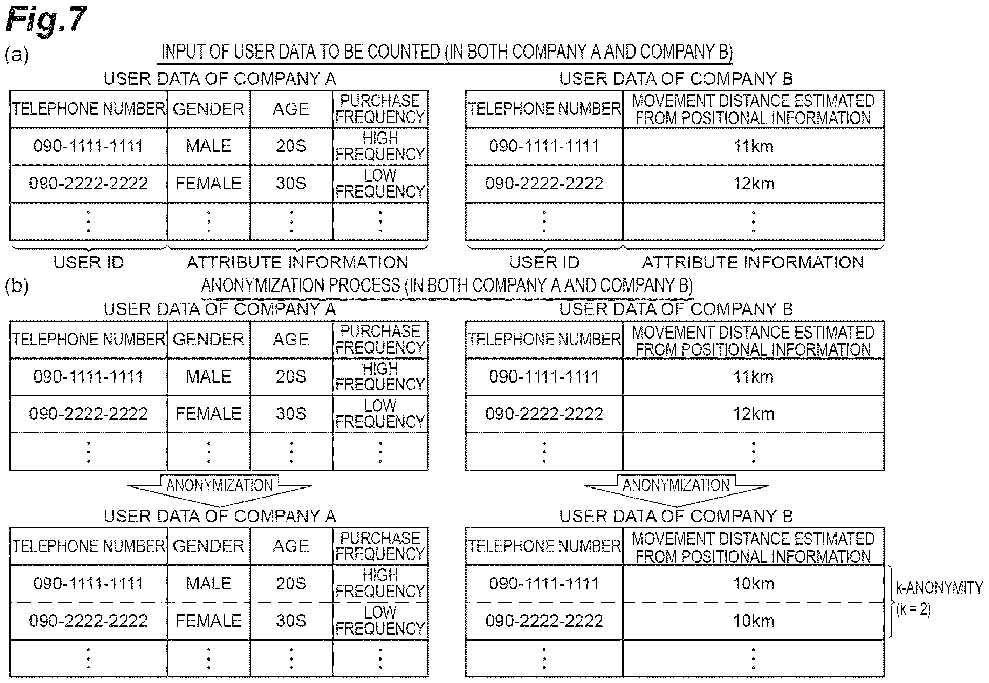

First, in each of the devices 20A and 20B, the user data to be counted is input to the anonymization processing unit 21 (Steps A1 and B1 in FIG. 6). As shown in FIG. 7(a), the user data of the company A that is input here includes the user ID and the attribute information related to the user. For example, a telephone number is used as the user ID, and information, such as gender, age, and a purchase frequency, is given as an example of the attribute information. In addition, the input user data of the company B includes the user ID and the attribute information related to the user. A telephone number is used as the user ID, and information, such as a movement distance estimated from positional information, is given as an example of the attribute information.

Then, as shown in FIG. 7(b), in each of the devices 20A and 20B, the anonymization processing unit 21 executes an anonymization process as the process for privacy protection of the attribute information on the user data held by each device itself (Steps A2 and B2). Here, k-anonymity that converts the user data such that k or more user data items having the same attribute information are present in the target user data (k-anonymity is satisfied) to reduce the probability of an individual being specified to one-kth or less. For example, for the attribute information (the movement distance estimated from the positional information) of the user data of the company B, both attribute information of 11 km and attribute information of 12 km are converted into attribute information of 10 km by k-anonymity, in which k = 2 is established, such that two or more user data items having the same attribute information (the movement distance = 10 km) are present.

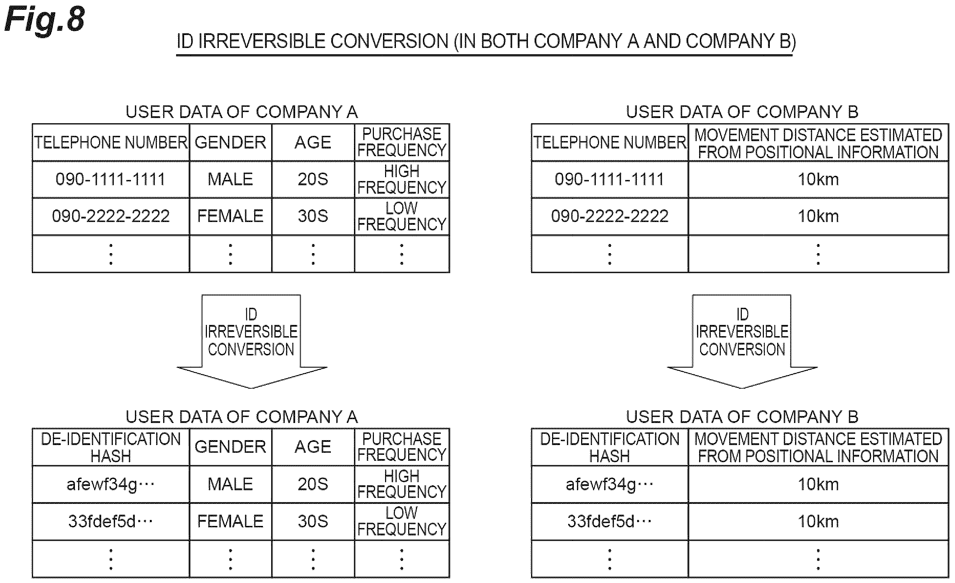

Then, as shown in FIG. 8, in each of the devices 20A and 20B, the ID irreversible conversion unit 22 executes a process for irreversible conversion into the user ID on the user data held by each device itself (Steps A3 and B3). Specifically, the ID irreversible conversion unit 22 executes the hashing process on the user ID (here, for example, the telephone number) and then discards the salt used in the hashing process.

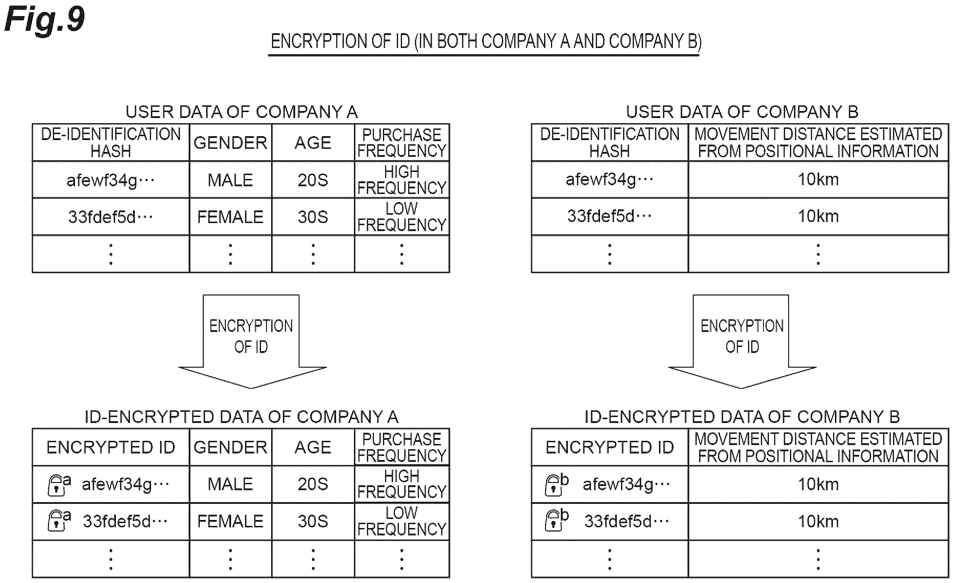

Then, as shown in FIG. 9, in the device 20A, the ID encryption unit 23A encrypts a de-identification hash (a portion corresponding to the user ID in the user data) with the private key a, which has been prepared in advance, to obtain ID-encrypted data of the company A (Step A4). Similarly, in the device 20B, the ID encryption unit 23A encrypts a de-identification hash (a portion corresponding to the user ID in the user data) with the private key b, which has been prepared in advance, to obtain ID-encrypted data of the company B (Step B4).

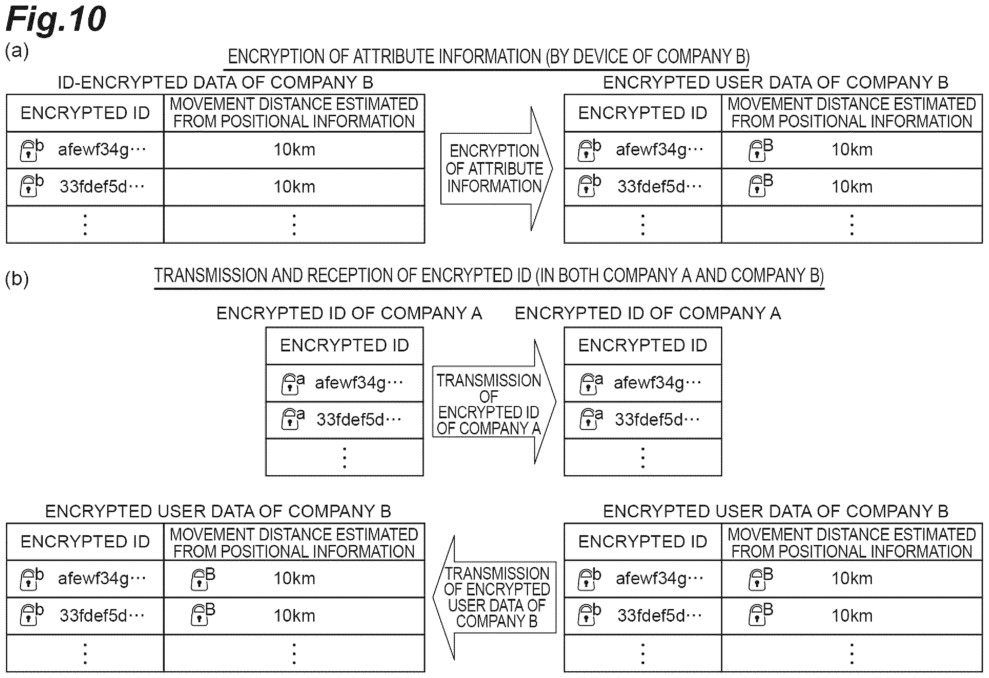

Then, as shown in FIG. 10(a), in the device 20B, the attribute information encryption unit 23B encrypts the attribute information in the ID-encrypted data of the company B obtained in Step B4 with a private key B prepared in advance, using the homomorphic encryption method, in which the counting process can be executed, to generate encrypted user data of the company B (Step B5).

Then, as shown in FIG. 10(b), in the device 20A, the data transmitting and receiving unit 24 transmits the encrypted ID of the company A included in the ID-encrypted data of the company A obtained in Step A4 to the data transmitting and receiving unit 24 of the device 20B (Step A5). In addition, in the device 20B, the data transmitting and receiving unit 24 transmits the encrypted user data of the company B obtained in Step B5 (that is, data including the encrypted ID and encrypted attribute information of the company B) to the data transmitting and receiving unit 24 of the device 20A (Step B6).

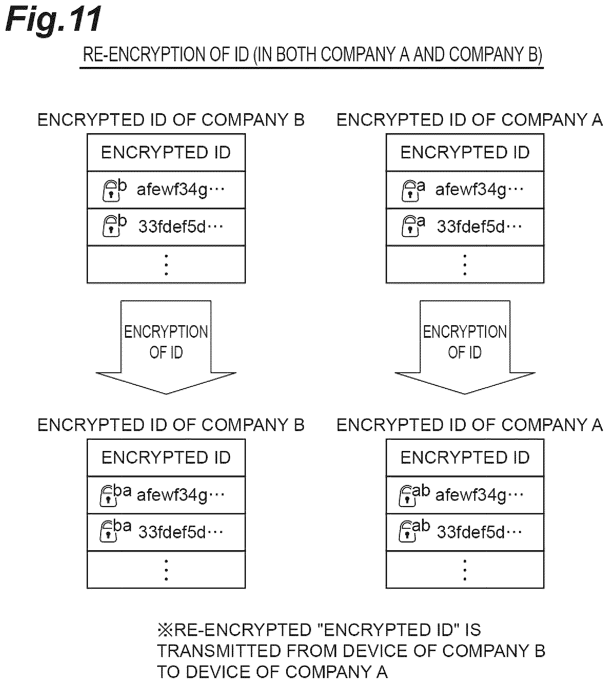

Then, as shown in FIG. 11, in the device 20A, the ID encryption unit 23A re-encrypts the encrypted ID of the company B included in the encrypted user data of the company B transmitted from the device 20B in Step B6 with the private key a to obtain the encrypted ID of the company B encrypted with both the private keys a and b (Step A6). Similarly, in the device 20B, the ID encryption unit 23A re-encrypts the encrypted ID of the company A transmitted from the device 20A in Step A5 with the private key b to obtain the encrypted ID of the company A encrypted with both the private keys a and b (Step B7). Then, in the device 20B, the data transmitting and receiving unit 24 transmits the "encrypted ID of the company A encrypted with both the private keys a and b" obtained in Step B7 to the device 20A (Step B8), and the data transmitting and receiving unit 24 of the device 20A receives the encrypted ID of the company A (Step A7).

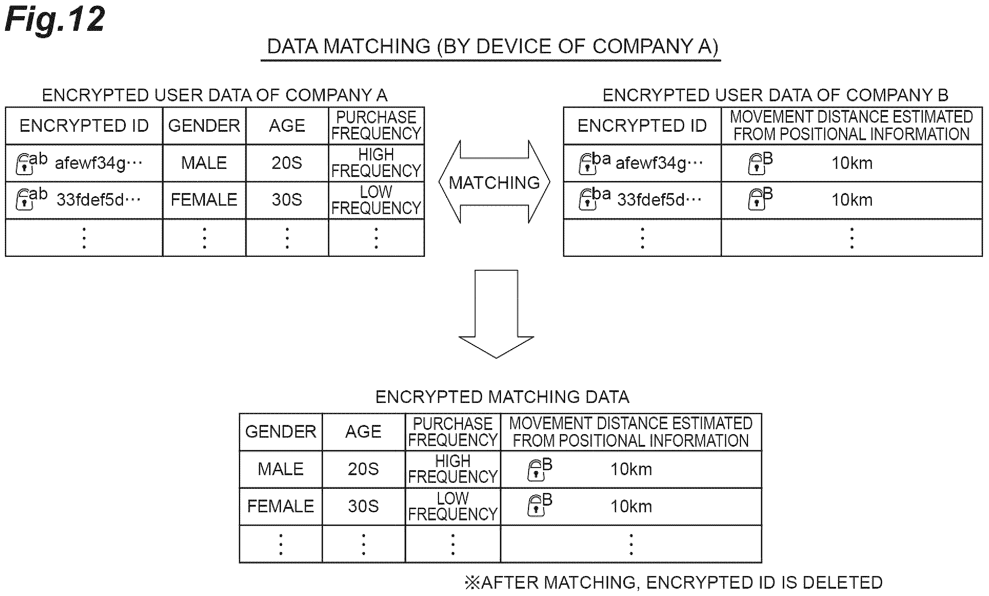

Then, as shown in FIG. 12, in the device 20A, the data matching unit 25 replaces the "encrypted ID encrypted with the private key a" in the "ID-encrypted data of the company A" obtained by the ID encryption in Step A4 with the "encrypted ID of the company A encrypted with both the private keys a and b" received in Step A7 to obtain the encrypted user data of the company A shown in the upper left of FIG. 12. In addition, the data matching unit 25 replaces the "encrypted ID of the company B encrypted with the private key b" in the "encrypted user data of the company B" received in Step A5 with the "encrypted ID of the company B encrypted with both the private keys a and b" obtained by the re-encryption in Step A6 to obtain the encrypted user data of the company B shown in the upper right of FIG. 12. Then, the data matching unit 25 matches the encrypted user data of the company A with the encrypted user data of the company B using "the encrypted ID of the company A encrypted with both the private keys a and b" and "the encrypted ID of the company B encrypted with both the private keys a and b" as keys (Step A8). Here, in a case where "the encrypted ID of the company A encrypted with both the private keys a and b" is matched with the "encrypted ID of the company B encrypted with both the private keys a and b", the attribute information in the encrypted user data of the company A and the attribute information in the encrypted user data of the company B are combined into one record in the encrypted matching data. After the combination, "the encrypted ID of the company A encrypted with both the private keys a and b" and "the encrypted ID of the company B encrypted with both the private keys a and b" are deleted. In this way, the encrypted matching data including the unencrypted attribute information of the company A and the encrypted attribute information of the company B shown in a lower portion of FIG. 12 is obtained. Here, since the attribute information of the company B is encrypted, the company A is not capable of knowing the content of the attribute information. Therefore, the encrypted matching data is generated without revealing the content of the attribute information to be concealed by the company B to the company A.

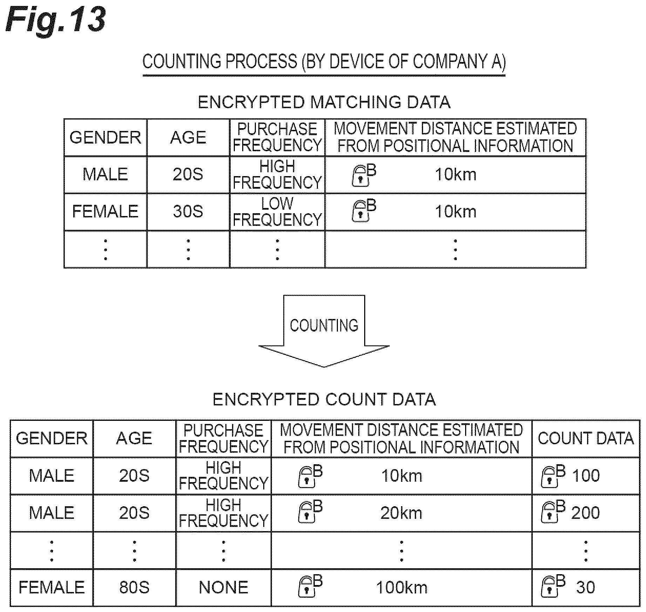

Then, as shown in FIG. 13, in the device 20A, the counting processing unit 26 performs the following counting process on the encrypted matching data (Step A9). As described above, the attribute information in the ID-encrypted data of the company B is encrypted with the private key B prepared in advance by the homomorphic encryption method, in which the counting process can be executed, in Step B5. Therefore, in practice, each attribute information item included in the encrypted matching data shown in FIG. 13 is configured by binary values with a predetermined format (bit string arrangement). For "gender", for example, the following is defined: when the first and second bits in the encrypted matching data are "10", this indicates a "male"; and, when the first and second bits are "01", this indicates a "female". In addition, for the "movement distance" encrypted with the private key B, for example, the following is defined: when a P-th bit from the beginning of the encrypted matching data is "1", this indicates "10 km"; when a (P+1)-th bit is "1", this indicates "20 km"; and, when a (P+2)-th bit is "1", this indicates "30 km". For example, in a record in which the P-th bit in the bit string indicating the "movement distance" is "1", bits other than the P-th bit in the bit string indicating the "movement distance" are set to "0". In this case, since the company A does not know the private key B, the company A is not capable of ascertaining the actual content (10 km, 20 km, or the like) related to the "movement distance" and can only ascertain it as a simple bit string. In consideration of the above, the counting processing unit 26 performs, for example, the following counting process.

First, the counting processing unit 26 categorizes a plurality of records constituting the encrypted matching data on the basis of the attribute information (the unencrypted gender, age, and purchase frequency) of the company A. That is, the counting processing unit 26 classifies the plurality of records constituting the encrypted matching data into a plurality of categories such as a "male, 20s, high frequency" category, a "male, 20s, low frequency" category, a "male, 30s, high frequency" category, a "male, 30s, low frequency" category, and the like.

Then, the counting processing unit 26 performs a counting process of calculating the sum of a plurality of records, which belong to each category and are represented by binary values, in the vertical direction (between the same bits in the bit string) for each category. In addition, since the attribute information of the company B represented by binary values is encrypted by an encryption method having the characteristics of homomorphic encryption, it is possible to calculate the sum even in the encrypted state. In this way, the number of records in which the P-th bit is "1" (that is, the counting result of a movement distance of 10 km), the number of records in which the (P+1)-th bit is "1" (that is, the counting result of a movement distance of 20 km), the number of records in which the (P+2)-th bit is "1" (that is, the counting result of a movement distance of 30 km), and the like are obtained for each category.

Further, the counting processing unit 26 converts the encrypted count data obtained by adding the count data for each category to the categorized encrypted matching data into a tidy data format shown in a lower portion of FIG. 13 to obtain encrypted count data. In the counting process in Step A9, since the company A does not know the private key B, the company A is not capable of ascertaining the actual content (10 km, 20 km, or the like) of the "movement distance" which is the attribute information of the company B, and it is possible to prevent the actual content of the attribute information of the company B from being leaked to the company A.

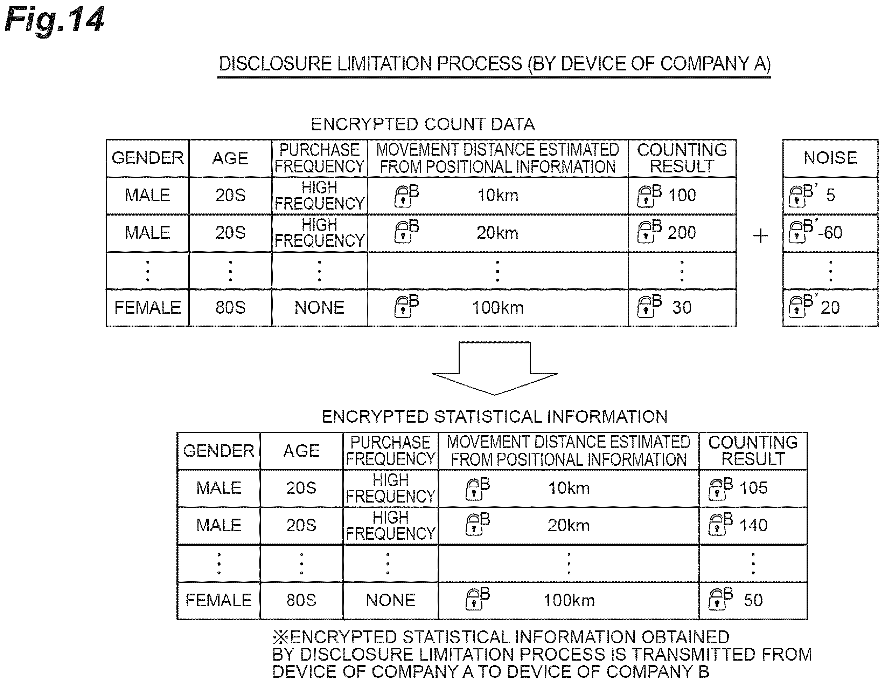

Then, as shown in FIG. 14, in the device 20A, the disclosure limitation processing unit 27 executes the following disclosure limitation process on the encrypted count data generated by the counting processing unit 26 to generate encrypted statistical information (Step A10). For example, the disclosure limitation processing unit 27 generates noise using a computational key B' (a type of public key) of the company B and gives the generated noise to the encrypted count data to generate encrypted statistical information. In addition, it is assumed that the computational key B' corresponds to the private key B and has been shared in advance with the company A by the company B.

Then, the data transmitting and receiving unit 24 of the device 20A transmits the encrypted statistical information generated in Step A10 to the device 20B (Step A11), and the data transmitting and receiving unit 24 of the device 20B receives the encrypted statistical information (Step B9).

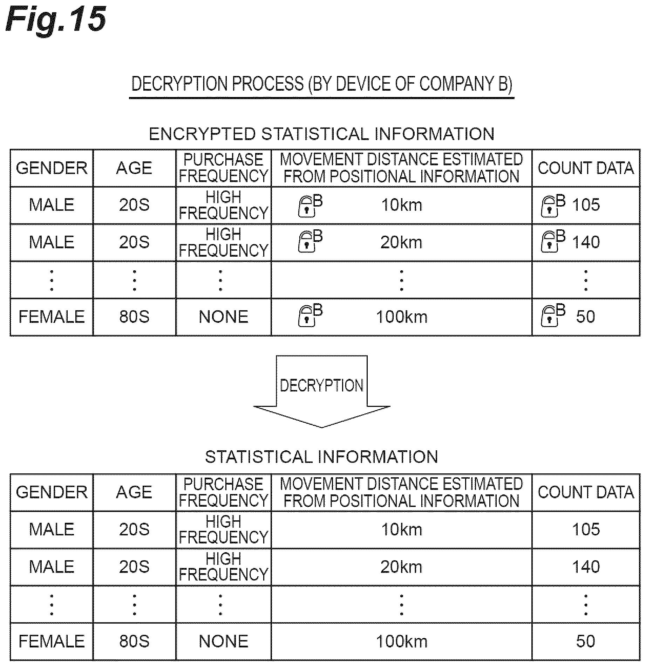

In addition, in the device 20B, the received encrypted statistical information is transmitted to the decryption unit 28, and the decryption unit 28 of the device 20B that knows the private key B decrypts the encrypted statistical information as shown in FIG. 15 and appropriately outputs the obtained statistical information (Step B10). For example, the statistical information may be output to be displayed or printed out by a predetermined operation performed by an operator of the device 20B.

According to the above-described embodiment of the present disclosure, the coordination between the device 20A of the company A and the device 20B of the company B makes it possible to generate the statistical information from which the correspondence relationship with individuals has been excluded, without revealing both the attribute information to be concealed and the private key to other devices.

Each of the device 20A and the device 20B includes the ID irreversible conversion unit 22 that executes the process for irreversible conversion into the user ID on the user data held by each device itself before the encryption of the user ID, which makes it possible to increase the effectiveness of de-identification. In addition, since the irreversible conversion process includes the hashing process, there is no need to apply a special irreversible conversion process, and a general irreversible conversion process called a hashing process can be applied to improve ease of implementation. Further, after executing the hashing process on the user ID, the ID irreversible conversion unit 22 discards the salt used in the hashing process. The discard of the salt used in the hashing process makes it possible to take every possible measure to eliminate the possibility of data restoration.

Each of the device 20A and the device 20B includes the anonymization processing unit 21 that executes the process for privacy protection of the attribute information on the user data held by each device itself before the encryption of the user ID, which makes it possible to increase the effectiveness of de-identification. In addition, since the privacy protection includes at least one of k-anonymity, l-diversity, and t-closeness, there is no need to apply special privacy protection, and general privacy protection, such as k-anonymity, l-diversity, and t-closeness, can be applied to improve ease of implementation.

Further, the disclosure limitation process executed by the disclosure limitation processing unit 27 includes a disclosure limitation process based on differential privacy. Therefore, there is no need to apply a special disclosure limitation process, and a general disclosure limitation process based on differential privacy can be applied to improve ease of implementation.

The data transmitting and receiving unit 24 of the device 20A transmits the encrypted statistical information generated by the disclosure limitation processing unit 27 to the data transmitting and receiving unit 24 of the device 20B, and the decryption unit 28 of the device 20B decrypts the encrypted statistical information on the basis of a decryption method corresponding to the encryption by the encryption unit 23. In this way, the encrypted statistical information can be restored to plaintext statistical information.

### (For Modification Examples)

Various modification examples of the first and second embodiments will be described in order below.

### (Modification Example 1)

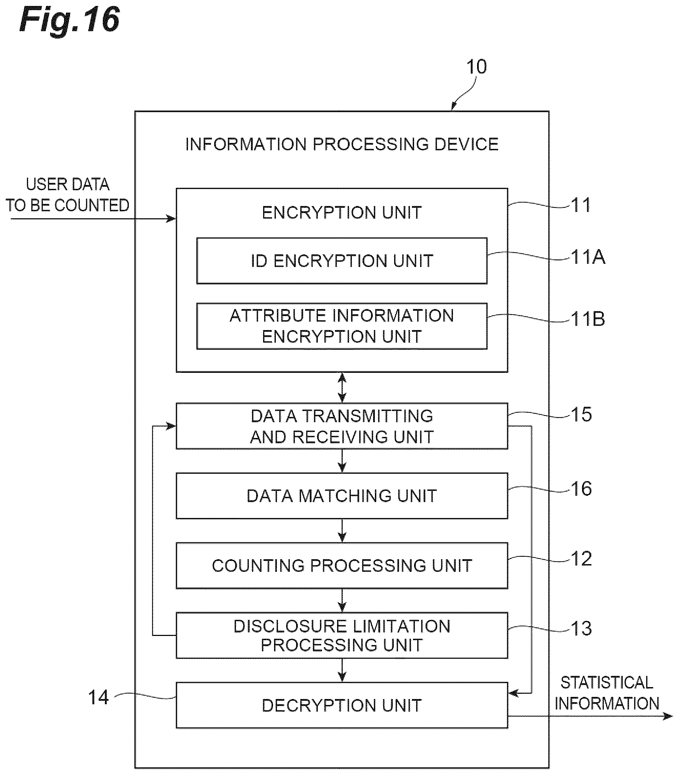

FIG. 16 shows, as a modification example of the information processing device according to the first embodiment, a configuration that can generate encrypted statistical information in cooperation with another information processing device having the same configuration. As shown in FIG. 16, an information processing device 10 according to Modification Example 1 further includes a data transmitting and receiving unit 15 and a data matching unit 16 in addition to the configurations shown in FIG. 1 according to the first embodiment. The data transmitting and receiving unit 15 is a functional unit that transmits and receives encrypted user data to and from other devices, similarly to the data transmitting and receiving unit 24 according to the second embodiment. Similarly to the data matching unit 25 according to the second embodiment, the data matching unit 16 is a functional unit that matches the encrypted user data of the device 10 itself generated by the encryption unit 11 of the device 10 itself with the encrypted user data of another device received from another device on the basis of a user ID correspondence portion specified on the basis of predetermined structural information of the user data.

In the case where there are the device of the company A and the device of the company B having the configuration shown in FIG. 16, in each of the devices of the company A and the company B, the encryption unit 11 encrypts the user data held by the device with the key of the device itself, and the data transmitting and receiving unit 15 exchanges the encrypted user data between the devices of the company A and the company B. In addition, the encryption unit 11 doubly encrypts the received user data of the counterpart device with the key of the device itself. Then, the data transmitting and receiving unit 15 of the device of the company B transmits the doubly encrypted user data of the device of the company A to the device of the company A.

Then, in the device of the company A, the data matching unit 16 matches the doubly encrypted user data of the device of the company A with the doubly encrypted user data of the device of the company B on the basis of the user ID correspondence portion specified on the basis of the predetermined structural information of the user data, and the counting processing unit 12 counts the number of encrypted user data items having the user ID correspondence portions matched with each other as a result of the matching by the data matching unit 16 to generate encrypted count data for the target user. Further, the disclosure limitation processing unit 13 executes the disclosure limitation process on the encrypted count data to generate encrypted statistical information. The generated encrypted statistical information is transmitted from the data transmitting and receiving unit 15 of the device of the company A to the data transmitting and receiving unit 15 of the device of the company B, and the decryption unit 14 of the device of the company B decrypts the encrypted statistical information and appropriately outputs the obtained statistical information.

According to the above-described Modification Example 1, in a case where the devices having the same configuration shown in FIG. 16 are present in a plurality of organizations, it is possible to generate statistical information using two or more data items by secure matching and the disclosure limitation process. In addition, one or both of the anonymization processing unit 21 and the ID irreversible conversion unit 22 described in the second embodiment may be further added to the configuration shown in FIG. 16. In this case, it is possible to increase the effectiveness of non-identification.

### (Modification Example 2)

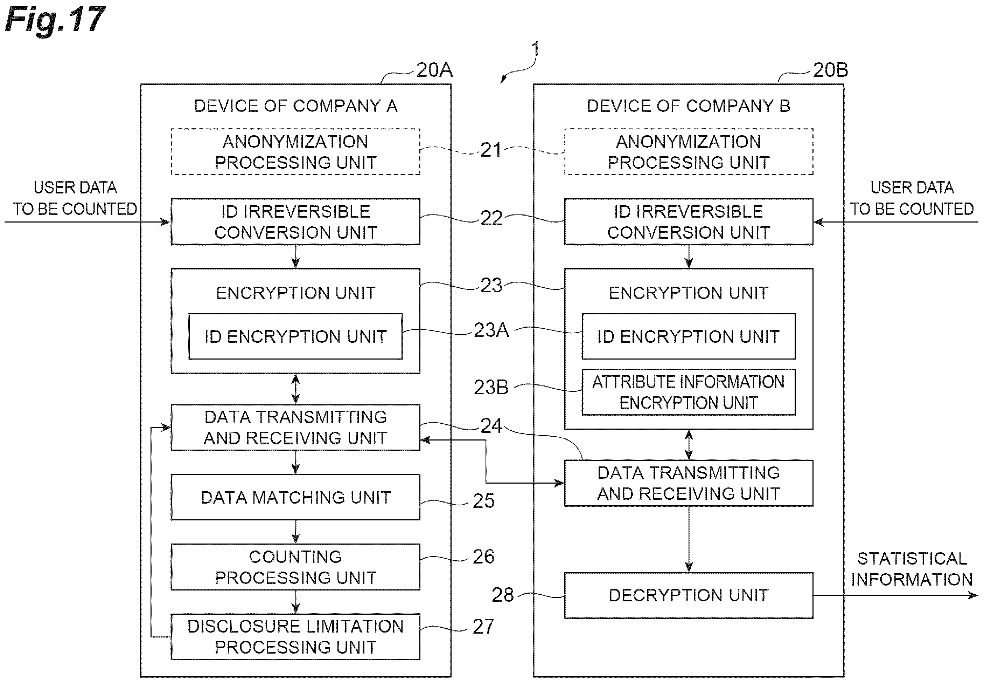

FIG. 17 shows a modification example of the configuration of the privacy protection data linkage system according to the second embodiment. As shown in FIG. 17, a configuration of a privacy protection data linkage system 1 according to Modification Example 2 is different from the configuration shown in FIG. 5 according to the second embodiment in that each of the devices 20A and 20B does not include the anonymization processing unit 21 as represented by dashed lines.

The anonymization processing unit 21 is a functional unit that executes a process for privacy protection of attribute information on the user data held by the device itself before the encryption of the user ID and is provided in each of the devices 20A and 20B. The anonymization processing unit 21 can enhance privacy protection, but is not a requirement. Therefore, as shown in FIG. 17, a simple configuration in which each of the devices 20A and 20B does not include the anonymization processing unit 21 is also permitted, and the privacy protection data linkage system 1 can be configured with a smaller number of configuration requirements.

### (Modification Example 3)

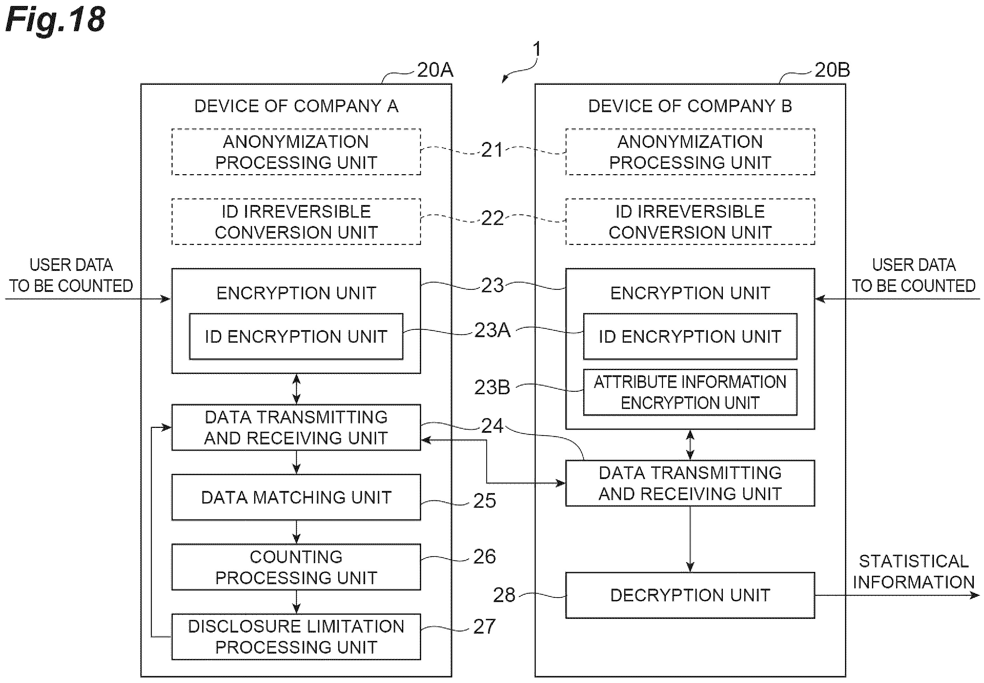

FIG. 18 shows another modification example of the configuration of the privacy protection data linkage system according to the second embodiment. As shown in FIG. 18, a configuration of a privacy protection data linkage system 1 according to Modification Example 3 is different from the configuration shown in FIG. 5 according to the second embodiment in that each of the devices 20A and 20B does not include both the anonymization processing unit 21 and the ID irreversible conversion unit 22 as represented by dashed lines.

The ID irreversible conversion unit 22 is a functional unit that executes the process for irreversible conversion into the user ID on the user data held by the device itself before the encryption of the user ID and is provided in each of the devices 20A and 20B. The ID irreversible conversion unit 22 can enhance privacy protection, but is not a requirement. Therefore, as shown in FIG. 18, a simple configuration in which each of the devices 20A and 20B does not include both the anonymization processing unit 21 and the ID irreversible conversion unit 22 is also permitted, and the privacy protection data linkage system 1 can be configured with a smaller number of configuration requirements than that in Modification Example 2.

### (Modification Example 4)

In the above-described embodiments, the process of counting the number of user data items including both the user ID and the attribute information has been described. However, the attribute information may not be a requirement, and the number of user data items including at least the user ID may be counted. An example in which the user data is counted and the companies A and B count the number of persons (the number of users) who can be matched using the user ID as a key will be described below.

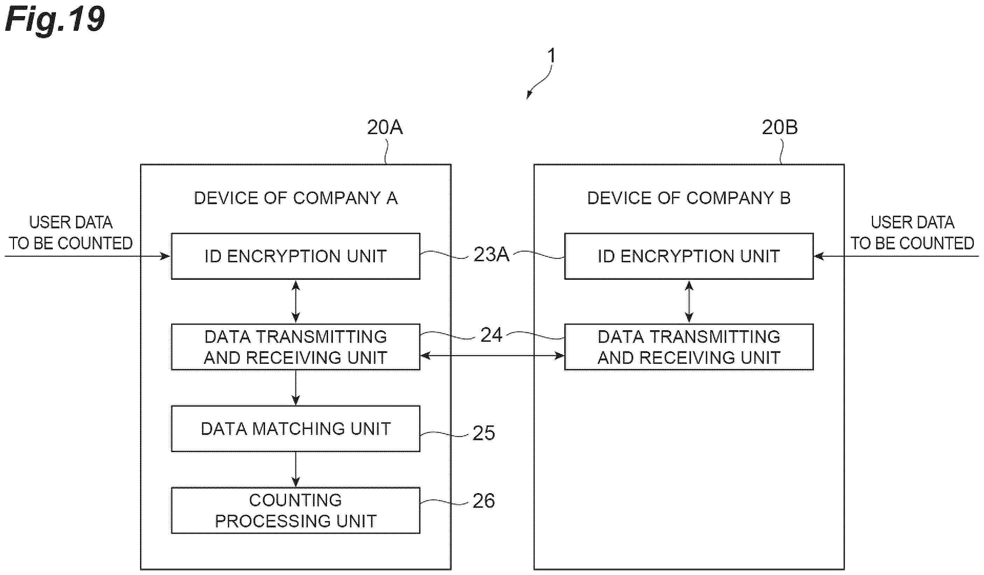

As shown in FIG. 19, in a privacy protection data linkage system 1 according to Modification Example 4, each of the devices 20A and 20B includes an ID encryption unit 23A that encrypts the user ID in the user data to be counted on the basis of an encryption key held by the device itself and a keyed one-way commutative operation to generate encrypted user data for the user data to be counted and a data transmitting and receiving unit 24 that transmits and receives the encrypted user data. The device 20A further includes a data matching unit 25 that matches the encrypted user data of the device itself (device 20A) generated by the ID encryption unit 23A with the encrypted user data of the counterpart device (device 20B) received by the data transmitting and receiving unit 24 on the basis of a user ID correspondence portion specified on the basis of predetermined structural information of the user data and a counting processing unit 26 that counts the number of encrypted user data items having the user ID correspondence portions matched with each other as a result of the matching by the data matching unit 25 to generate encrypted count data for a target user. In addition, since FIG. 19 shows the minimum necessary configuration, it goes without saying that the devices 20A and 20B may have configurations other than the above-described configuration.

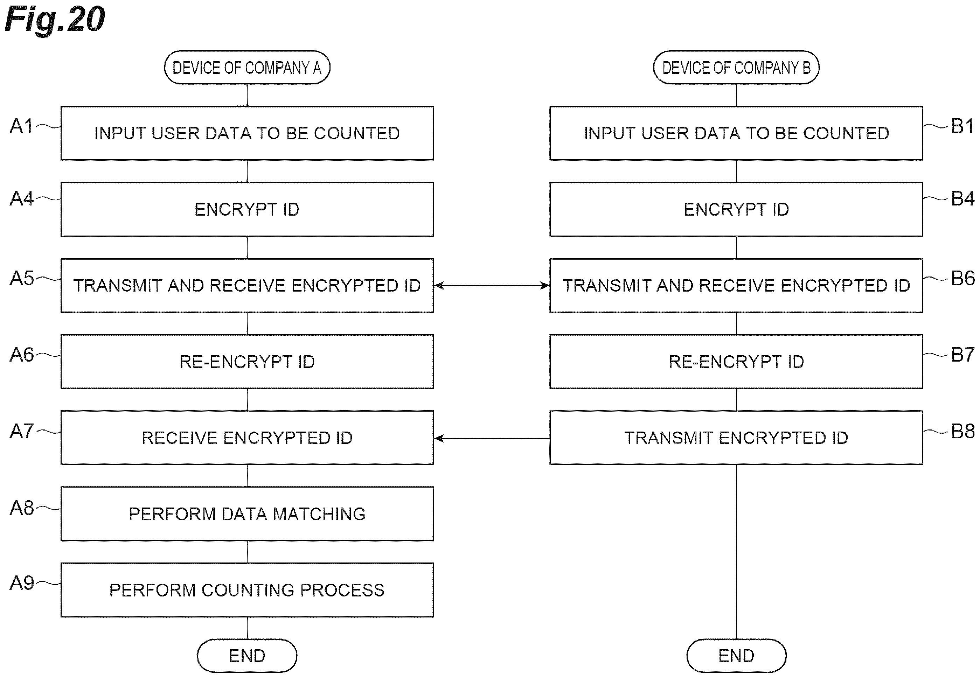

In the privacy protection data linkage system 1 according to Modification Example 4, the process shown in FIG. 20 is executed. The process shown in FIG. 20 corresponds to a portion of the process shown in FIG. 6 described in the second embodiment, and the corresponding processes between FIG. 20 and FIG. 6 are denoted by the same step numbers. Up to Steps A6 and B7, the encrypted ID of the company A encrypted with both the private key a of the company A and the private key b of the company B and the encrypted ID of the company B encrypted with both the private key a of the company A and the private key b of the company B are obtained without revealing the content of the user data to the counterpart, whose duplicated detailed description will be omitted here. Then, the data matching unit 25 of the device 20A matches the encrypted ID of the company A with the encrypted ID of the company B (Step A8), and the counting processing unit 26 counts the number of encrypted user data items having the user ID correspondence portions matched with each other as a result of the matching to obtain the number of persons (the number of users) who can be matched with each other as the counting result (Step A9). In this way, in the process in which the attribute information is not a requirement and the user data including at least the user ID is to be counted, it is possible to obtain the number of persons (the number of users) who can be matched with each other as the counting result, without revealing the content of the user data to the counterpart.

In addition, the gist of the present disclosure is as described in the following [1] to [10].
[1] An information processing device that holds user data including a user ID and attribute information related to a user and generates statistical information related to a target user, the information processing device including:
   an encryption unit that encrypts the user ID in user data to be counted on the basis of an encryption key held by the information processing device itself and a keyed one-way commutative operation and encrypts the attribute information in the user data to be counted using a homomorphic encryption method, in which a counting process is executable, to generate encrypted user data for the user data to be counted;
   a counting processing unit that counts the number of encrypted user data items having common attribute information among the encrypted user data items generated by the encryption unit to generate encrypted count data; and
   a disclosure limitation processing unit that executes a disclosure limitation process on the encrypted count data generated by the counting processing unit to generate encrypted statistical information.
[2] The information processing device according to [1],
   wherein the information processing device generates the statistical information related to the target user in cooperation with a counterpart device,
   the information processing device further includes:
      a data transmitting and receiving unit that transmits and receives the encrypted user data to and from the counterpart device; and
      a data matching unit that matches the encrypted user data of the information processing device itself generated by the encryption unit with the encrypted user data of the counterpart device received by the data transmitting and receiving unit on the basis of a user ID correspondence portion specified on the basis of predetermined structural information of the user data, and
      the counting processing unit counts the number of encrypted user data items having the user ID correspondence portions matched with each other as a result of the matching by the data matching unit to generate encrypted count data for the target user.
[3] An information processing device that holds user data including a user ID and generates statistical information related to a target user in cooperation with a counterpart device, the information processing device including:
   an ID encryption unit that encrypts the user ID in user data to be counted on the basis of an encryption key held by the information processing device itself and a keyed one-way commutative operation to generate encrypted user data for the user data to be counted;
   a data transmitting and receiving unit that transmits and receives the encrypted user data to and from the counterpart device;
   a data matching unit that matches the encrypted user data of the information processing device itself generated by the ID encryption unit with the encrypted user data of the counterpart device received by the data transmitting and receiving unit on the basis of a user ID correspondence portion specified on the basis of predetermined structural information of the user data; and
   a counting processing unit that counts the number of encrypted user data items having the user ID correspondence portions matched with each other as a result of the matching by the data matching unit to generate encrypted count data for the target user.
[4] A privacy protection data linkage system that includes a plurality of devices holding user data including a user ID and attribute information related to a user and generates statistical information related to a target user using cooperation between one device among the plurality of devices and a counterpart device,
   wherein the one device includes an ID encryption unit that encrypts the user ID in user data to be counted on the basis of an encryption key held by the one device itself and a keyed one-way commutative operation to generate encrypted user data for the user data to be counted,
   the counterpart device includes an encryption unit that encrypts the user ID in the user data to be counted on the basis of an encryption key held by the counterpart device itself and a keyed one-way commutative operation and encrypts the attribute information in the user data to be counted using a homomorphic encryption method, in which a counting process is executable, to generate encrypted user data for the user data to be counted,
   each of the one device and the counterpart device further includes a data transmitting and receiving unit that transmits and receives the encrypted user data, and
   the one device further includes:
      a data matching unit that matches the encrypted user data of the one device itself generated by the encryption unit with the encrypted user data of the counterpart device received by the data transmitting and receiving unit on the basis of a user ID correspondence portion specified on the basis of predetermined structural information of the user data;
      a counting processing unit that counts the number of encrypted user data items having the user ID correspondence portions matched with each other as a result of the matching by the data matching unit to generate encrypted count data for the target user; and
      a disclosure limitation processing unit that executes a disclosure limitation process on the encrypted count data generated by the counting processing unit to generate encrypted statistical information.
[5] The privacy protection data linkage system according to [4],
   wherein each of the one device and the counterpart device further includes an anonymization processing unit that executes a process for privacy protection of the attribute information on the user data held by each device itself before the encryption of the user ID.
[6] The privacy protection data linkage system according to [5],
   wherein the privacy protection includes at least one of k-anonymity, l-diversity, and t-closeness.
[7] The privacy protection data linkage system according to any one of [4] to [6],
   wherein the disclosure limitation process includes a disclosure limitation process based on differential privacy.
[8] The privacy protection data linkage system according to any one of [4] to [7],
   wherein the data transmitting and receiving unit of the one device transmits the encrypted statistical information generated by the disclosure limitation processing unit to the data transmitting and receiving unit of the counterpart device, and
   the counterpart device further includes a decryption unit that decrypts the encrypted statistical information received by the data transmitting and receiving unit of the counterpart device on the basis of a decryption method corresponding to the encryption by the encryption unit.
[9] A privacy protection data linkage system that includes a plurality of devices holding user data including a user ID and generates statistical information related to a target user using cooperation between one device among the plurality of devices and a counterpart device,
   wherein each of the one device and the counterpart device includes:
   an ID encryption unit that encrypts the user ID in user data to be counted on the basis of an encryption key held by each device itself and a keyed one-way commutative operation to generate encrypted user data for the user data to be counted; and
   a data transmitting and receiving unit that transmits and receives the encrypted user data, and
   the one device further includes:
      a data matching unit that matches the encrypted user data of the one device itself generated by the ID encryption unit with the encrypted user data of the counterpart device received by the data transmitting and receiving unit on the basis of a user ID correspondence portion specified on the basis of predetermined structural information of the user data; and
      a counting processing unit that counts the number of encrypted user data items having the user ID correspondence portions matched with each other as a result of the matching by the data matching unit to generate encrypted count data for the target user.
[10] The privacy protection data linkage system according to any one of [4] to [9],
   wherein each of the one device and the counterpart device further includes an ID irreversible conversion unit that executes a process for irreversible conversion into the user ID on the user data held by each device itself before the encryption of the user ID.
[11] The privacy protection data linkage system according to [10],
   wherein the irreversible conversion process includes a hashing process.
[12] The privacy protection data linkage system according to [11],
   wherein the ID irreversible conversion unit discards a salt used in the hashing process after executing the hashing process on the user ID.

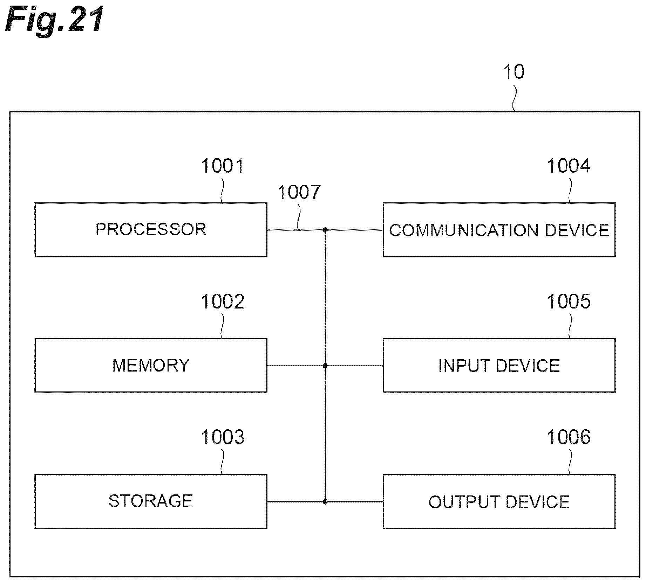

### (Description of Terms, Description of Hardware Configuration (FIG. 21), and the Like)

In addition, the block diagrams used to describe the embodiments show functional blocks. These functional blocks (configuration units) are implemented by any combination of at least one of hardware and software. A method for implementing each functional block is not particularly limited. That is, each functional block may be implemented by using one device that is physically or logically coupled or by connecting two or more devices that are physically or logically separated from each other directly or indirectly (for example, wirelessly or in a wired manner) and using the plurality of devices. The functional blocks may be implemented by combining software with the one device or the plurality of devices.

The functions include judgment, decision, determination, computation, calculation, processing, derivation, investigation, search, confirmation, reception, transmission, output, access, resolution, selection, choice, establishment, comparison, assumption, expectation, consideration, broadcasting, notifying, communicating, forwarding, configuring, reconfiguring, allocating, mapping, and assigning. However, the functions are not limited thereto. For example, a functional block (configuration unit) having a transmission function is referred to as a transmitting unit or a transmitter. In any case, as described above, a method for implementing the functional block is not particularly limited.

For example, the information processing device 10 according to this embodiment may function as a computer that executes the processes according to the present disclosure. FIG. 21 is a diagram showing an example of the hardware configuration of the information processing device 10. The information processing device 10 may be physically configured as a computer device including, for example, a processor 1001, a memory 1002, a storage 1003, a communication device 1004, an input device 1005, an output device 1006, and a bus 1007. The device 20A and the device 20B in FIG. 5 may have the same configuration as the information processing device 10.

In the following description, the term "device" can be replaced with, for example, a circuit, an apparatus, or a unit. The hardware configuration of the information processing device 10 may be configured to include one or more of the devices shown in Figure or may be configured not to include some of the devices.

Each of the functions of the information processing device 10 is implemented by loading predetermined software (program) onto hardware, such as the processor 1001 and the memory 1002, and causing the processor 1001 to perform an operation to control communication by the communication device 1004 or to control at least one of the reading and writing of data from and to the memory 1002 and the storage 1003.

For example, the processor 1001 operates an operating system to control the entire computer. The processor 1001 may be configured by a central processing unit (CPU) including, for example, an interface with peripheral devices, a control device, an arithmetic device, and a register.

In addition, the processor 1001 reads, for example, a program (program code), a software module, or data from at least one of the storage 1003 and the communication device 1004 to the memory 1002 and performs various processes according to the read program, software module, or data. As the program, a program that causes the computer to execute at least some of the operations described in the above-mentioned embodiments is used. In the above description, the various processes are executed by one processor 1001. However, the various processes may be executed sequentially or at the same time by two or more processors 1001. The processor 1001 may be configured by one or more chips. In addition, the program may be transmitted from the network through a telecommunication line.

The memory 1002 is a computer-readable recording medium and may be configured by, for example, at least one of a ROM (Read Only Memory), an EPROM (Erasable Programmable ROM), an EEPROM (Electrically Erasable Programmable ROM), and a RAM (Random Access Memory). The memory 1002 may be referred to as, for example, a register, a cache, or a main memory (main storage device). The memory 1002 can store, for example, an executable program (program code) or a software module for executing a communication method according to the embodiment of the present disclosure.

The storage 1003 is a computer-readable recording medium and may be configured by, for example, at least one of as an optical disc, such as a CD-ROM (compact disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a Floppy (registered trademark) disk, and a magnetic strip. The storage 1003 may also be referred to as an auxiliary storage device. The above-described storage medium may be, for example, a database, a server, or other suitable media including at least one of the memory 1002 and the storage 1003.

The communication device 1004 is hardware (transmitting and receiving device) for communication between computers through at least one of a wired network and a wireless network and is referred to as, for example, a network device, a network controller, a network card, a communication module, or the like. The communication device 1004 may include, for example, a high-frequency switch, a duplexer, a filter, a frequency synthesizer, and the like in order to implement at least one of frequency division duplex (FDD) and time division duplex (TDD).

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

Further, the devices, such as the processor 1001 and the memory 1002, are connected to each other by the bus 1007 for information communication. The bus 1007 may be configured by a single bus or may be configured using different buses between the devices.

Furthermore, the information processing device 10 may be configured to include hardware, such as a microprocessor, a digital signal processor (DSP), an ASIC (Application Specific Integrated Circuit), a PLD (Programmable Logic Device), and an FPGA (Field Programmable Gate Array), and some or all of the functional blocks may be implemented by the hardware. For example, the processor 1001 may be implemented using at least one of the hardware components.

The notification of information is not limited to the aspects/embodiments described in the present disclosure and may be performed by other methods. For example, the notification of information may be performed by physical layer signaling (for example, DCI (Downlink Control Information) or UCI (Uplink Control Information)), higher layer signaling (for example, RRC (Radio Resource Control) signaling, MAC (Medium Access Control) signaling, or broadcast information (an MIB (Master Information Block) or an SIB (System Information Block))), other types of signaling, or a combination thereof. In addition, the RRC signaling may also be referred to as an RRC message and may be, for example, an RRC connection setup message, an RRC connection reconfiguration message, or the like.

Each of the aspects/embodiments described in the present disclosure may be applied to at least one of systems using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (x is, for example, an integer or a decimal), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems and next-generation systems that are expanded, modified, created, and defined on the basis of these systems. In addition, a plurality of systems may be combined (for example, a combination of at least one of LTE and LTE-A and 5G or the like) and then applied.

The order of the process procedures, the sequence, the flowchart, and the like in each of the aspects/embodiments described in the present disclosure may be interchanged as long as there is no contradiction. For example, in the method described in the present disclosure, elements of various steps are presented using an exemplary order, and the present disclosure is not limited to the presented specific order.

The input or output information and the like may be stored in a specific location (for example, a memory) or may be managed using a management table. For example, the input or output information and the like may be overwritten, updated, or edited. For example, the output information and the like may be deleted. The input information and the like may be transmitted to other devices.

The determination may be performed with a value (0 or 1) represented by 1 bit, may be performed by a true or false value (Boolean: true or false), or may be performed by comparison with a numerical value (for example, comparison with a predetermined value).

The aspects/embodiments described in the present specification may be singly used, may be combined for use, or may be switched and used according to execution. In addition, the notification of predetermined information (for example, the notification of "being X") is not limited to being performed explicitly and may be performed implicitly (for example, the notification of the predetermined information is not performed).

The present disclosure has been described in detail above, but it should be apparent to those skilled in the art that the present disclosure is not limited to the embodiments described in the present disclosure. The present disclosure can be embodied as corrected and changed aspects without departing from the gist and scope of the present disclosure defined by the claims. Therefore, the description of the present disclosure has been made for exemplary description and is not intended to imply any limitations on the present disclosure.

Of course, regardless of whether software is referred to as software, firmware, middleware, a microcode, or a hardware description language or is referred to as other names, the software needs to be interpreted broadly to mean a command, a command set, a code, a code segment, a program code, a program, a sub-program, a software module, an application, a software application, a software package, a routine, a subroutine, an object, an executable file, an execution thread, a procedure, a function, and the like.

In addition, software, a command, information, and the like may be transmitted or received through a transmission medium. For example, in a case where software is transmitted from a website, a server, or other remote sources by at least one of a wired technology (a coaxial cable, an optical fiber cable, a twisted pair, a digital subscriber line (DSL), or the like) and a wireless technology (infrared rays, microwaves, or the like), at least one of the wired technology and the wireless technology is included in the definition of the transmission medium.

The information, the signals, and the like described in the present disclosure may be represented by any of various other techniques. For example, the data, the order, the command, the information, the signal, the bit, the symbol, the chip, and the like mentioned throughout the above description may be represented by a voltage, a current, an electromagnetic wave, a magnetic field or a magnetic particle, an optical field or a photon, or any combination thereof.

In addition, the terms described in the present disclosure and the terms necessary to understand the present disclosure may be replaced with terms that have the same or similar meanings. For example, at least one of a communication channel and a symbol may be a signal (signaling). In addition, the signal may be a message. Further, a component carrier (CC) may be referred to as a carrier frequency, a cell, a frequency carrier, or the like.

The terms "system" and "network" used in the present disclosure are compatibly used.

Furthermore, the information, the parameters, and the like described in the present disclosure may be represented by an absolute value, may be represented by a relative value from a predetermined value, or may be represented by another corresponding information item. For example, a radio resource may be instructed by an index.

The names used for the above-described parameters are not limited in any respect. Further, a numerical expression or the like using the parameters may be different from the numerical expression described explicitly in the present disclosure. Since various communication channels (for example, PUCCH, PDCCH, and the like) and information elements can be identified by appropriate names, various names assigned to the various communication channels and information elements are not limited in any respect.

In some cases, the terms "determining" and "deciding" used in the present disclosure include a wide variety of operations. The "determining" and the "deciding" can include cases in which performing, for example, judging, calculating, computing, processing, deriving, investigating, looking up, search, or inquiry (for example, looking up in a table, a database, or other data structures), and ascertaining is considered to perform "determining" and "deciding". In addition, the "determining" and the "deciding" can include, for example, cases in which performing receiving (for example, receiving information), transmitting (for example, transmitting information), input, output, and accessing (for example, accessing data in a memory) is considered to perform "determining" and "deciding". Further, the "determining" and the "deciding" can include cases in which performing resolving, selecting, choosing, establishing, comparing, and the like is considered to perform "determining" and "deciding". That is, the "determining" and the "deciding" can include a case in which any operation is considered to perform "determining" and "deciding". Furthermore, the "determining (deciding)" may be replaced with "assuming", "expecting", "considering", or the like.

The term "on the basis of" used in the present disclosure does not mean "on the basis of only" unless otherwise stated. In other words, the term "on the basis of" means both "on the basis of only" and "on the basis of at least".

Any reference to elements using names "first", "second", and the like used in the present disclosure does not generally limit the quantity or order of those elements. The names can be used in the present disclosure as methods used to conveniently distinguish two or more elements from each other. Therefore, the reference to the first and second elements does not mean that only two elements are employed or the first element is prior to the second element in any form.

In the present disclosure, in a case where the terms "include" and "including" and modifications thereof are used, the terms are intended to be inclusive like the term "comprising". Further, the term "or" used in the present disclosure is not intended to be an exclusive OR.

In the present disclosure, for example, in a case where the articles, such as "a", "an", and "the", in English are added in translation, the present disclosure may include that the nouns following these articles are plural.

In the present disclosure, the term "A and B are different" may mean that "A and B are different from each other". The term may also mean that "A and B are different from C". The terms "separated", "coupled", and the like may be interpreted in the same way as "different".

### Reference Signs List

1: privacy protection data linkage system, 10: information processing device, 11: encryption unit, 11A: ID encryption unit, 11B: attribute information encryption unit, 12: counting processing unit, 13: disclosure limitation processing unit, 14: decryption unit, 15: data transmitting and receiving unit, 16: data matching unit, 20A, 20B: information processing device, 21: anonymization processing unit, 22: ID irreversible conversion unit, 23: encryption unit, 23A: ID encryption unit, 23B: attribute information encryption unit, 24: data transmitting and receiving unit, 25: data matching unit, 26: counting processing unit, 27: disclosure limitation processing unit, 28: decryption unit, 1001: processor, 1002: memory, 1003: storage, 1004: communication device, 1005: input device, 1006: output device, 1007: bus.

## Claims

1. An information processing device that holds user data including a user ID and attribute information related to a user and generates statistical information related to a target user, the information processing device comprising:
an encryption unit that encrypts the user ID in user data to be counted on the basis of an encryption key held by the information processing device itself and a keyed one-way commutative operation and encrypts the attribute information in the user data to be counted using a homomorphic encryption method, in which a counting process is executable, to generate encrypted user data for the user data to be counted;
a counting processing unit that counts the number of encrypted user data items having common attribute information among the encrypted user data items generated by the encryption unit to generate encrypted count data; and
a disclosure limitation processing unit that executes a disclosure limitation process on the encrypted count data generated by the counting processing unit to generate encrypted statistical information.

2. The information processing device according to claim 1,
wherein the information processing device generates the statistical information related to the target user in cooperation with a counterpart device,
the information processing device further includes:
a data transmitting and receiving unit that transmits and receives the encrypted user data to and from the counterpart device; and
a data matching unit that matches the encrypted user data of the information processing device itself generated by the encryption unit with the encrypted user data of the counterpart device received by the data transmitting and receiving unit on the basis of a user ID correspondence portion specified on the basis of predetermined structural information of the user data, and
the counting processing unit counts the number of encrypted user data items having the user ID correspondence portions matched with each other as a result of the matching by the data matching unit to generate encrypted count data for the target user.

3. An information processing device that holds user data including a user ID and generates statistical information related to a target user in cooperation with a counterpart device, the information processing device comprising:
an ID encryption unit that encrypts the user ID in user data to be counted on the basis of an encryption key held by the information processing device itself and a keyed one-way commutative operation to generate encrypted user data for the user data to be counted;
a data transmitting and receiving unit that transmits and receives the encrypted user data to and from the counterpart device;
a data matching unit that matches the encrypted user data of the information processing device itself generated by the ID encryption unit with the encrypted user data of the counterpart device received by the data transmitting and receiving unit on the basis of a user ID correspondence portion specified on the basis of predetermined structural information of the user data; and
a counting processing unit that counts the number of encrypted user data items having the user ID correspondence portions matched with each other as a result of the matching by the data matching unit to generate encrypted count data for the target user.

4. A privacy protection data linkage system that includes a plurality of devices holding user data including a user ID and attribute information related to a user and generates statistical information related to a target user using cooperation between one device among the plurality of devices and a counterpart device,
wherein the one device includes an ID encryption unit that encrypts the user ID in user data to be counted on the basis of an encryption key held by the one device itself and a keyed one-way commutative operation to generate encrypted user data for the user data to be counted,
the counterpart device includes an encryption unit that encrypts the user ID in the user data to be counted on the basis of an encryption key held by the counterpart device itself and a keyed one-way commutative operation and encrypts the attribute information in the user data to be counted using a homomorphic encryption method, in which a counting process is executable, to generate encrypted user data for the user data to be counted,
each of the one device and the counterpart device further includes a data transmitting and receiving unit that transmits and receives the encrypted user data, and
the one device further includes:
a data matching unit that matches the encrypted user data of the one device itself generated by the encryption unit with the encrypted user data of the counterpart device received by the data transmitting and receiving unit on the basis of a user ID correspondence portion specified on the basis of predetermined structural information of the user data;
a counting processing unit that counts the number of encrypted user data items having the user ID correspondence portions matched with each other as a result of the matching by the data matching unit to generate encrypted count data for the target user; and
a disclosure limitation processing unit that executes a disclosure limitation process on the encrypted count data generated by the counting processing unit to generate encrypted statistical information.

5. The privacy protection data linkage system according to claim 4,
wherein each of the one device and the counterpart device further includes an anonymization processing unit that executes a process for privacy protection of the attribute information on the user data held by each device itself before the encryption of the user ID.

6. The privacy protection data linkage system according to claim 5,
wherein the privacy protection includes at least one of k-anonymity, l-diversity, and t-closeness.

7. The privacy protection data linkage system according to claim 4,
wherein the disclosure limitation process includes a disclosure limitation process based on differential privacy.

8. The privacy protection data linkage system according to claim 4,
wherein the data transmitting and receiving unit of the one device transmits the encrypted statistical information generated by the disclosure limitation processing unit to the data transmitting and receiving unit of the counterpart device, and
the counterpart device further includes a decryption unit that decrypts the encrypted statistical information received by the data transmitting and receiving unit of the counterpart device on the basis of a decryption method corresponding to the encryption by the encryption unit.

9. A privacy protection data linkage system that includes a plurality of devices holding user data including a user ID and generates statistical information related to a target user using cooperation between one device among the plurality of devices and a counterpart device,
wherein each of the one device and the counterpart device includes:
an ID encryption unit that encrypts the user ID in user data to be counted on the basis of an encryption key held by each device itself and a keyed one-way commutative operation to generate encrypted user data for the user data to be counted; and
a data transmitting and receiving unit that transmits and receives the encrypted user data, and
the one device further includes:
a data matching unit that matches the encrypted user data of the one device itself generated by the ID encryption unit with the encrypted user data of the counterpart device received by the data transmitting and receiving unit on the basis of a user ID correspondence portion specified on the basis of predetermined structural information of the user data; and
a counting processing unit that counts the number of encrypted user data items having the user ID correspondence portions matched with each other as a result of the matching by the data matching unit to generate encrypted count data for the target user.

10. The privacy protection data linkage system according to claim 4,
wherein each of the one device and the counterpart device further includes an ID irreversible conversion unit that executes a process for irreversible conversion into the user ID on the user data held by each device itself before the encryption of the user ID.

11. The privacy protection data linkage system according to claim 10,
wherein the irreversible conversion process includes a hashing process.

12. The privacy protection data linkage system according to claim 11,
wherein the ID irreversible conversion unit discards a salt used in the hashing process after executing the hashing process on the user ID.
